Europäisches Patentamt

European Patent Office

Office européen des brevets

(11) Numéro de publication: **0 283 381**
**A1**

## (12) DEMANDE DE BREVET EUROPEEN

(21) Numéro de dépôt: 88400543.0

(51) Int. Cl.⁴: **B 01 D 37/02**

(22) Date de dépôt: 08.03.88

(30) Priorité: 10.03.87 FR 8703372

(43) Date de publication de la demande:
21.09.88 Bulletin 88/38

(84) Etats contractants désignés:
BE CH DE IT LI NL

(71) Demandeur: INSTITUT FRANCAIS DU PETROLE
4, Avenue de Bois-Préau
F-92502 Rueil-Malmaison (FR)

ELF FRANCE, Société Anonyme dite:
Tour ELF 2 place de la Coupole La Défense 6
F-92400 Courbevole (FR)

(72) Inventeur: Navarre, François-Pierre
Lotissement des Cédres Chemin de Barthélémy
F-69269 Charbonnière les Bains (FR)

Llobell, Richard
43, rue Bellecombe
F-69006 Lyon (FR)

Briant, Jean
6, bis allée de la Roseraie Domaine de Grandchamps
F-78230 Le Pecq (FR)

Gutton, Jean-Noel
Les Fabriques
F-42320 Saint Paul en Gazez (FR)

Feugier, Alain
3, Ruelle du Moulle Morainvilliers
F-78630 Orgeval (FR)

Bossand, Bernard
84, Hameau des centurières
F-69960 Communay (FR)

(74) Mandataire: Colas des Francs, Jean
Institut Français du Pétrole 4, Avenue de Bois Préau
F-92502 Rueil-Malmaison (FR)

(54) **Procédé d'épuration et de valorisation de suspensions d'huiles d'hydrocarbures.**

(57) Procédé d épuration et de valorisation d'une suspension eau huile matières solides par filtration à travers un filtre à précouche.

La suspension (3) après passage éventuel dans un bac homogénéiseur (10) et un préchauffeur (11) est envoyée dans un bac (2) alimentant un filtre à précouche (1), la précouche, constituée de farine de bois, étant alimentée par la ligne (4). La précouche, après usage est évacuée par la ligne (5). Le filtrat est séparé, dans un décanteur (7) en huile (8) et eau (9).

La précouche usagée est utilisable comme combustible soit seule soit en mélange avec d'autres combustibles tels que biomasse, asphalte ou huile lourde.

EP 0 283 381 A1

## Description

## PROCEDE D'EPURATION ET DE VALORISATION DE SUSPENSIONS D'HUILES D'HYDROCARBURES

La présente invention concerne un procédé d'épuration et de valorisation de suspensions huileuses. Par suspensions huileuses on entend des mélanges émulsionnés de liquides (eau et hydrocarbures) et de solides (matières solides en suspension notamment asphaltes, poussières, poudres de catalyseurs, chaux, etc).

Ces suspensions sont disponibles dans les raffineries (rejets ou "slops"), au voisinage des puits de pétrole et plus généralement tout au long du circuit du traitement du pétrole, y compris dans les tankers et les cuves de stockage des produits pétroliers. Elles ne peuvent "être rejetées" en l'état dans la nature en raison de leur caractère polluant. On a donc proposé de les incinérer ce qui consomme des quantités non négligeables d'autres combustibles, ou de les traiter par voie chimique ou mécanique. Les traitements chimiques par des agents tensio-actifs nuisent à la valorisation ultérieure de l'huile car une partie des agents tensio-actifs reste dans l'huile. Leur présence rend dangereux un recyclage de l'hydrocarbure dans les dessaleurs et peut interdire également un raffinage catalytique compte tenu des risques de pollution des catalyseurs utilisés.

Le traitement mécanique ne consomme pas d'énergie thermique ou de réactifs chimiques; il consomme par contre des surfaces de filtration ou des additifs de filtration dont certains sont relativement coûteux et dont le rejet ultérieur dans la nature est indésirable. Ces traitements sont décrits par exemple dans US_3.835.021 et US-4.260.489.

L'objet de l'invention est de proposer l'emploi d'une technique de filtration et d'adsorption utilisant un additif et des conditions de filtration particulièrement adaptées au traitement des suspensions huileuses et qui fournit une phase aqueuse aisément traitable dans une unité conventionnelle d'épurations et une phase huileuse facilement valorisable comme combustible et une phase solide dite "gateau" facilement valorisable en raison de son caractère combustible par exemple comme combustible d'appoint d'incinérateur d'ordures ménagères. Pour la fabrication de ces combustibles on peut s'adresser à des techniques de mise en oeuvre connues par exemple celles des brevets suivants : US-4.548.615, FR-2.561.253 et FR-2.580.662.

Le procédé de l'invention consiste à fitrer la suspension sur un filtre à précouche dont la précouche est une farine de bois dont au moins 80% en poids (de préférence au moins 90%) des particules ont une taille entre 50 et 300 micromètres. Avantageusement leur teneur en particules de taille inférieure à 50 micromètres est inférieure à 10% en poids, de préférence inférieure à 4% en poids. Les particules de taille supérieure à 500 micromètres sont peu efficaces et seront donc évitées. On préfère les farines de bois renfermant moins de 1% en poids de résine.

On utilise de préférence un filtre à surface mobile tel que filtre à tambour ou filtre à bande. En outre quel que soit le type de filtre, on a constaté avec surprise que les filtres à dépression de 10 à 75kPa permettant un fractionnement plus régulier du filtre (précouche homogène et de bonne résistance mécanique, meilleure élimination du gateau) et une desodorisation plus efficace de la boue, lorsque celle-ci renferme des mercaptans.

La filtration sous-vide peut se faire sur un filtre à bande ou sur un filtre rotatif à couche. La couche filtrante support aura une maille dont la taille est comprise, par exemple, entre 5 et 20 micromètres. Si l'on choisit le tambour la vitesse de rotation du tambour est comprise de préférence, entre 5 et 100 rotations par heure. L'épaisseur du gateau prélevé à chaque rotation est de l'ordre de 0,2 à 2mm par exemple 0,5mm. Elle est généralement d'autant plus élevée que la teneur en matières en suspension est plus grande. Au moment de la recharge du tambour l'épaisseur de la couche peut atteindre 50 à 200mm par exemple 120mm.

Pour un fonctionnement optimal on préfère que la suspension ait une viscosité de 4 à 20mPa.s et une température entre 30 et 80°C. L'emploi d'un préchauffeur est donc recommandé.

Pour l'alimentation du filtre on préfère l'emploi de pompes volumétriques à celui de pompes centrifuges, en raison des effets de cisaillement excessifs de ces dernières.

La farine de bois peut être déposée sur le filtre avant l'opération et/ou mélangée à la suspension et le mélange résultant envoyé sur le filtre, de manière à déposer progressivement la farine de bois.

La farine de bois peut être utilisée seule ou en mélange avec d'autres éléments filtrants en poudre par exemple charbon actif, déchets de charbon de bois, cendres volantes, catalyseur usé, poudre d'asphalte solide à grande surface spécifique. On peut également mélanger la suspension avec les autres éléments filtrants avant de l'envoyer sur le filtre.

Le procédé est très efficace, en particulier pour les suspensions renfermant en poids 2 à 98% d'eau, 5 à 90% d'huile et 0,5 à 10% de matières en suspension.

Le gâteau obtenu constitue un combustible. Il peut donc être brûlé ou être mélangé à d'autres matériaux combustibles, par exemple des asphaltes, de la biomasse, des résidus-sous-vide de pétrole ou des fuels pour constituer des combustibles mixtes.

Le filtrat se sépare aisément en deux couches, une couche d'huile et une couche d'eau, à condition d'avoir respecté la taille critique des particules de farine de bois.

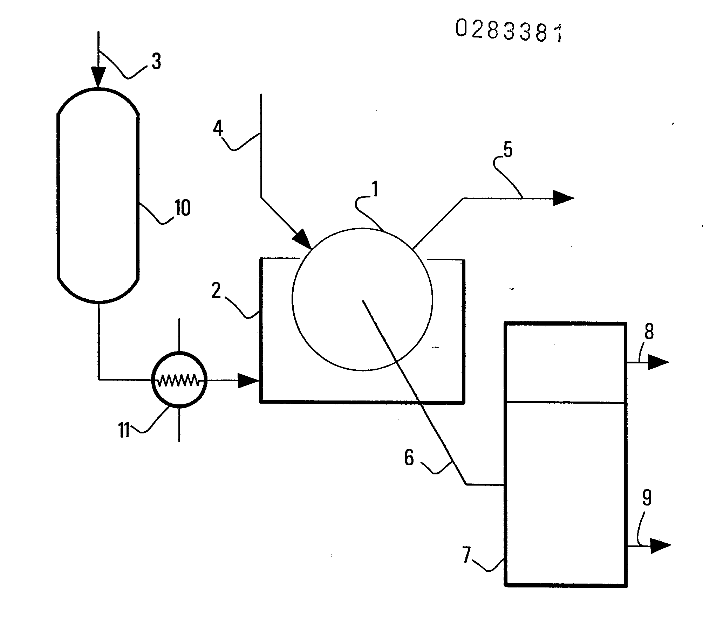

L'invention est illustrée par la figure jointe.

Le filtre rotatif sous-vide (1) plonge en partie dans un bac (2) recevant la suspension brute provenant de la ligne (3). Celle-ci a traversé au préalable un ballon tampon homogénéiseur (10) et un préchauffeur (11). L'homogénéisation peut être obtenue par agitation modérée. Le filtre reçoit aussi la farine de bois par la ligne (4). Un couteau racleur prélève une mince couche de gateau par exemple 0,5mm d'épaisseur qui est éliminée par la ligne (5). Le liquide ayant filtré est envoyé par la ligne (6) au bac de décantation (7). Par la ligne (8) on recueille l'huile et par la ligne (9) l'eau. On peut facultativement disposer sur la ligne (6) des dispositifs coalesceurs additionnels.

Exemple :

On traite une suspension huileuse de raffinerie de couleur noire et d'odeur nauséabonde, de densité d = 0,978, de viscosité 5m Pa.s à 50°C, de teneur (en poids) en solides de 1,9%, dont 0,3% d'asphaltènes (norme AFNOR T-60 115), de teneur en eau 79% et de teneur en huile 19,1%.

On utilise une farine de bois d'épicéa renfermant, en poids, 4% de particules inférieures à 50 micromètres et 96% de particules de 50 à 250 micromètres, de densité apparente 0,13g/cm3 et de teneur en résine inférieure à 1%.

Le filtre est un filtre rotatif pourvu d'une couche de farine de bois de 10cm d'épaisseur en moyenne, dont 0,5mm sont enlevés à chaque tour et remplacés par une épaisseur sensiblement égale de farine fraiche. Le filtre tourne à 10 tours par heure. Le débit de filtre est ici de 0,08 m3/m2/hr.

Le gâteau obtenu constitue une pâte sombre renfermant en poids :
hydrocarbures 10
eau 10
farine de bois 30
matières en suspension 50

Le pouvoir calorifique supérieur est de 19.817 KJ/kg. La combustion une fois déclenchée se poursuit d'elle-même.

Les liquides filtrés décantent aisément. L'huile est de couleur brune, pratiquement exempte d'eau (0,25% en poids), de densité d = 0,850 et de viscosité 4mPa.s à 50°C. Le résidu à 800°C n'est que de 0,07% en poids. La teneur en asphaltènes est de 0,93g/100 (Norme AFNOR T 60115). L'eau peut être envoyée dans une station d'épuration conventionnelle compte tenu de ses qualités :

pH 7,8
DBO 204 mg/litre (DBO5 : demande biochimique en oxygène : cinq jours)
DCO 998 mg/litre (DCO : demande chimique en oxygène norme T90.101)
Matière en suspensions totales 95 mg/litre
Carbone organique total 280 mg/litre
Hydrocarbure 2 mg/kg
Indice Phénol 0,93 mg/litre.

Le bilan matière montre l'intérêt de cette technique. A partir de 13.000T/an de suspension et en consommant 244T/an de farine de bois on obtient 2112T/an d'hydrocarbures récupérés, 10320T/an d'eau envoyée à une station d'épuration et 812T/an de gateau combustible. Le gateau mélangé à 253T/an d'asphalte ou de résidu sous vide fournit 1000T/an de combustible de valeur.

A titre de comparaison quand la même filtration est effectuée en utilisant un matériau minéral, la vermiculite à la place de la farine de bois, les performances sont moins bonnes. L'huile renferme 0,5% en poids d'eau et donne un résidu à 800° de 0,15% en poids. L'eau renferme 2,7mg d'hydrocarbures et 168mg de matières en suspension par litre, son pH est de 8,2 et son indice de phénol est de 1,70 mg/litre.

A titre de seconde comparaison, quand la même filtration est effectuée en utilisant la terre de diatomées, à la place de la farine de bois, on constate au bout d'une heure que la vitesse de filtration est devenue trop faible pour permettre une utilisation industrielle. En outre la séparation des deux phases se fait mal : l'huile renferme environ 2 % en poids d'eau et la phase aqueuse renferme environ 1 % en poids d'huile.

Dans des formes de réalisation préférées, la précouche peut renfermer, outre au moins 80 % en poids de farine de bois, 3 à 15 % en poids de fibres cellulosiques de longueur 250-2000 μm et d'épaisseur 10-30 μm ; ou autrement, outre les 80 % en poids de farine de bois, 3 à 10 % en poids de fibrilles de bois de longueur inférieure à 0,1 μm.

De préférence les deux catégories ci-dessus d'additifs (fibres + fibrilles) sont présentes simultanément.

Exemple (en poids) :
85 % de poudre d'épicéa 150-250 μm
10 % de fibres cellulosiques (long = 500-1000 μm; épaisseur 10-25 μm)
5 % de fibrilles de longueur inférieure à 0,1 μm.

On peut également utiliser des agents chimiques connus comme "briseurs d'émulsions", par exemple à raison de 0,05-0,5 % en poids dans la charge (la suspension eau-huile-solides).

Certaines amines oxyéthylées peuvent ainsi être utilisées, par exemple le "Noramox" à raison de 0,1 % en poids. On peut ainsi abaisser le temps de filtration d'environ 20 %.

**Revendications**

1. Procédé d'épuration et de valorisation d'une suspension d'huile d'hydrocarbures, renfermant en poids 2-98% d'eau, 5-90% d'huile et 0,5-10% de solides, dans lequel la suspension est filtrée sur un filtre à précouche, le filtrat est recueilli et la phase huile est séparée de la phase eau, caractérisé en ce que la précouche comprend de la farine de bois dont au moins 80% en poids des constituants ont une taille entre 50 et 300 micromètres et moins de 10% en poids ont une taille inférieure à 50 micromètres.

2. Procédé selon la revendication 1, dans lequel au moins 90% en poids des constituants de la farine de bois ont une taille entre 50 et 300 micromètres et moins de 4% une taille inférieure à 50 micromètres, la teneur en résine étant de 0 à 1% en poids.

3. Procédé selon la revendication 1 ou 2 dans lequel on opère en présence additionnelle de poudre de charbon actif, de déchets de charbon de bois, de cendres volantes ou d'asphalte solide en poudre.

4. Procédé selon l'une des revendications 1 à 3, dans lequel la suspension est filtrée à 30-80°C, à une viscosité de 4 à 20 mPa.s.

5. Procédé selon l'une des revendications 1 à 4, dans lequel la filtration est faite sur un filtre rotatif tournant de 5 à 100 tours par heure comportant une précouche de 50 à 200mm et dont on retire à chaque tour de 0,2 à 2mm d'épaisseur de la précouche.

6.Procédé selon l'une des revendications 1 à 5 dans lequel la filtration est faite dans un filtre à dépression dans lequel la dépression est de 10-75kPa.

7. Procédé selon l'une des revendications 1 à 6, dans lequel la vitesse de filtration est de 0,04-8 m3/m2/hr.

8. Procédé selon l'une des revendications 1 à 7, dans lequel la précouche comprend, outre la farine de bois, 3-15 % en poids de fibres cellulosiques de longueur 250-2000 µm et d'épaisseur 10-30 µm.

9. Procédé selon l'une des revendications 1 à 7, dans lequel la précouche comprend, outre la farine de bois, 3-10 % en poids de fibrilles de bois de longueur inférieure à 0,1 µm.

10. Procédé selon l'une des revendications 1 à 7, dans lequel la précouche comprend, outre la farine de bois, à la fois 3,15 % en poids de fibres cellulosiques de longueur 250-2000 µm et d'épaisseur 10-30 µm et 3-10 % en poids de fibrilles de bois de longueur inférieure à 0,1 µm.

0283381

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 510 055 (H.R. WHITE)<br>* Colonne 3, lignes 1-10; colonne 4, lignes 60-65, colonne 5, ligne 26 *<br>--- | 1,3,5,6 | B 01 D 37/02 |
| X | VOEDINGSMIDDELENTECHNOLOGIE, vol. 9, no. 20, 19 mai 1976, page 13, P.C. Noordervliet B.V., Zeist, NL; "Lignocel houtmeel als filtratiemedium"<br>* Page 13 *<br>--- | 1,2 | |
| A,D | US-A-4 260 489 (G. GREIG et al.)<br>* Colonne 4, lignes 10-23,45-48 *<br>--- | 1,6,7 | |
| A,D | US-A-3 835 021 (W.K. LORENZ et al.)<br>* Colonne 2, lignes 38-72; colonne 3, lignes 1-17 *<br>--- | 1,4,6 | |
| A | US-A-2 768 754 (S.W. BRIGGS)<br>* Colonne 5, lignes 38-43 *<br>----- | 1 | |

**DOMAINES TECHNIQUES RECHERCHES (Int. Cl.4)**

B 01 D

Le présent rapport a été établi pour toutes les revendications

| Lieu de la recherche | Date d'achèvement de la recherche | Examinateur |
|---|---|---|
| LA HAYE | 07-06-1988 | KERRES P.M.G. |